(19) Europäisches Patentamt
European Patent Office
Office européen des brevets

(11) EP 2 749 433 A1

(12) EUROPEAN PATENT APPLICATION
published in accordance with Art. 153(4) EPC

(43) Date of publication:
**02.07.2014 Bulletin 2014/27**

(21) Application number: **12828876.8**

(22) Date of filing: **24.08.2012**

(51) Int Cl.:
***B60C 5/00*** (2006.01) ***B29D 30/30*** (2006.01)

(86) International application number:
**PCT/JP2012/005338**

(87) International publication number:
**WO 2013/031165 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 JP 2011185318**

(71) Applicant: **Bridgestone Corporation**
**Chuo-ku**
**Tokyo 104-8340 (JP)**

(72) Inventors:
- **WATANABE, Toshiyuki**
**Kodaira-shi**
**Tokyo 187-8531 (JP)**
- **WAKI, Yoshiyuki**
**Kodaira-shi**
**Tokyo 187-8531 (JP)**
- **ISHIHARA, Taiga**
**Kodaira-shi**
**Tokyo 187-8531 (JP)**

(74) Representative: **Waldren, Robin Michael**
**Marks & Clerk LLP**
**90 Long Acre**
**London**
**WC2E 9RA (GB)**

## (54) PNEUMATIC TIRE AND MANUFACTURING METHOD THEREFOR

(57) An object of the present invention is to provide a pneumatic tire which can be easily manufactured and can reliably reduce cavity resonance sound. Specifically, the present invention provides a pneumatic tire at least having: a tread portion 3 including a belt 5 constituted of at least one belt layer; a bead portion 1; and an inner peripheral surface having short fibers 10 fixed to at least a portion thereof, wherein the innermost belt layer in the tire radial direction of the belt has a tire widthwise width BW, characterized in that: provided that the tire central region C is a region extending to be symmetrical with respect to the tire equatorial plane and having a width of BM/2 and a tire side region S is a region extending from each outer end in the tire widthwise direction of the tire central region C to a corresponding inner end in the tire radial direction of the bead portion 1, the tire central region C and each tire side region S satisfy a relationship represented by following formula (1) in the inner peripheral surface of the tire.

$$\text{Short fiber-fixed area in the tire central region/Area of the tire central region} < \text{Short fiber-fixed area in each tire side region/Area of each tire side region} \quad \cdots (1)$$



Printed by Jouve, 75001 PARIS (FR)

(Cont. next page)

FIG. 1

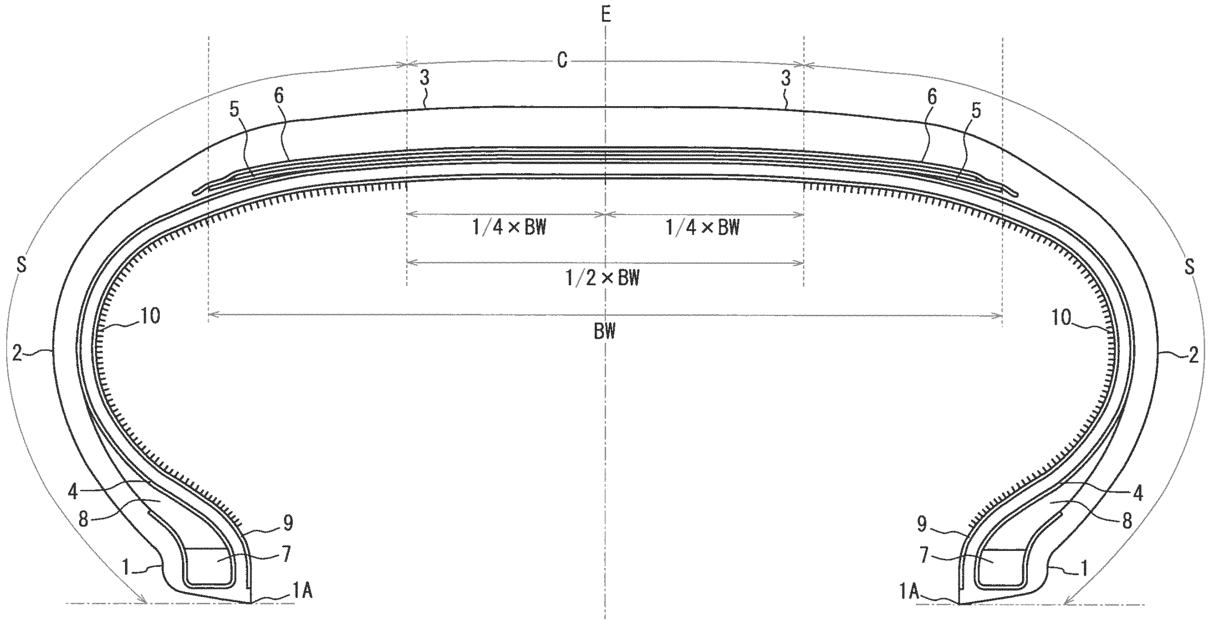

## Description

TECHNICAL FIELD

The present invention relates to a pneumatic tire and a method for manufacturing the pneumatic tire. In particular, the present invention relates to a low-road noise tire having plural short fibers provided standing upright at inner peripheral surfaces of respective side regions of a tire for the purpose of reducing cavity resonance sound and a method for manufacturing the low-road noise tire.

BACKGROUND ART

It is known that a pneumatic tire, due to structures thereof, exhibits the cavity resonance phenomenon governed by length of a circular tube inside the tire. A pneumatic tire, regardless of type thereof, generates tire road noise having cavity resonance frequency in the range of 200 to 270 Hz according to a circumference length thereof, which tire road noise is a main cause for unpleasant vehicle-interior noise.

A method for internally absorbing noise in the interior of a tire has conventionally been considered effective as a technique of reducing vehicle-interior noise because air resonance in the interior of the tire is a main cause for the vehicle-interior noise as described above. For example, PTL 1 proposes a technique of attaching short fibers to an inner peripheral surface of a tire.

CITATION LIST

Patent Literature

PTL 1: JP 2004-082387 (Laid-Open)

SUMMARY OF THE INVENTION

Technical Problems

However, attaching short fibers to the entire region of an inner peripheral surface of a tire as described in PTL 1 causes a problem that weight and thus rolling resistance of the tire increase, which deteriorates a fuel consumption rate of a vehicle on which such tires are mounted. Further, there arises another problem in this case in that riding comfort of the vehicle deteriorates because rigidity of a tread portion of the tire increases due to the attachment of short fibers. Moreover, there arises yet another problem in this case in that puncture-repair efficiency decreases because the short fibers at the inner peripheral surface of the tread portion of the tire absorb a puncture sealing agent when puncture in the tire is repaired by using the puncture sealing agent, i.e. the short fibers significantly deteriorate fluidity of the puncture sealing agent in puncture repair.

In view of the facts described above, an object of the present invention aiming at solving the aforementioned problems is to provide a pneumatic tire which can be easily manufactured and can reliably reduce cavity resonance sound and a method for manufacturing the pneumatic tire.

Solution to the Problems

As a result of a keen study to achieve the aforementioned object, the inventors of the present invention discovered that setting proportion of a short fiber-fixed area in each side region of a tire to be higher than proportion of a short fiber-fixed area in the central region of the tire in fixed provision of short fibers at an inner peripheral surface of the tire reliably decreases cavity resonance sound in spite of an easy production process, well suppresses an increase in rolling resistance of the tire and deterioration of riding comfort, and well suppresses absorption of a puncture sealing agent by short fibers when puncture in the tire is repaired by using the puncture sealing agent. The present invention has been completed based on these discoveries.

Specifically, the pneumatic tire of the present invention is a pneumatic tire at least having: a tread portion including a belt constituted of at least one belt layer; a bead portion; and an inner peripheral surface having short fibers fixed to at least a portion thereof, wherein the innermost belt layer in the tire radial direction of the belt has a width BW in the tire widthwise direction, **characterized in that:** provided that, in a cross sectional view in the widthwise direction of the tire, the tire central region is a region extending to be symmetrical with respect to the tire equatorial plane and having a width of 1/2 x BM in the tire widthwise direction and a tire side region is a region extending from each outer end in the tire widthwise direction of the tire central region to a corresponding inner end in the tire radial direction of the bead portion, the tire central region and each tire side region satisfy a relationship represented by following formula (1) in the inner peripheral surface of the tire,

$$\text{Short fiber-fixed area in the tire central region/Area of the tire central region} < \text{Short fiber-fixed area in each tire side region/Area of each tire side region} \quad \cdots \ (1)$$

The "short fiber-fixed area" represents an area of a region where short fibers are fixedly attached at a density of 50 fibers/cm$^2$ or more in the present invention.

The inventors of the present invention, as a result of a further study, also discovered that fixation of short fibers to the tire side regions is especially effective in terms of reducing cavity resonance and it can solely cause almost the same noise-reducing effect as fixation of short fibers to the entire regions of the inner peripheral surface of the tire. Accordingly, it is preferable that the short fibers are fixed exclusively to the tire side regions of the inner peripheral surface in the pneumatic tire of the present invention. An increase in rolling resistance and deterioration of riding comfort can be reliably suppressed and absorption of a puncture sealing agent by the short fibers can be reliably suppressed during puncture repair in this case.

Alternatively, it is preferable in the pneumatic tire of the present invention that the short fibers are fixed exclusively to each region, on the outer side in the tire widthwise direction of the innermost belt layer in the tire radial direction of the belt, of the inner peripheral surface of the tire. Cavity resonance sound of the tire can be significantly suppressed, while a required amount of a puncture sealing agent hardly increases, as compared with a tire having no short fibers fixed to an inner peripheral surface thereof, in this case.

A ratio of the short fiber-fixed area in each tire side region/the area of each tire side region is preferably ≥ 50% in the inner peripheral surface of the pneumatic tire of the present invention. Cavity resonance can then be reliably reduced.

In a preferable embodiment of the present invention, the short fibers are fixedly attached at a density of 100 fibers/cm$^2$ or more in a sub-region where the short fibers are fixed to the tire inner peripheral surface, of each tire side region. A good effect of reducing cavity resonance can be reliably obtained in this case. The short fibers are more preferably attached at a density of 1000 fibers/cm$^2$ or more and further more preferably attached at a density in the range of 10,000 to 50,000 fibers/cm$^2$ (inclusive of 10,000 fibers/cm$^2$ and 50,000 fibers/cm$^2$) in the sub-region of each tire side region in terms of reliably obtaining a better effect of reducing cavity resonance.

The average length of the short fibers is in the range of 0.5 mm to 10 mm in another preferable embodiment of the pneumatic tire of the present invention. A good effect of reducing cavity resonance can be obtained and tangling of the short fibers can be prevented from occurring in a satisfactory manner, thereby allowing a noise-absorbing effect to be sufficiently demonstrated, in this case. It is especially preferable for the same reasons as described above that the average length of the short fibers is in the range of 2 mm to 8 mm.

The average diameter of the short fibers is 1 $\mu$m to 500 $\mu$m in yet another preferable embodiment of the pneumatic tire of the present invention. Decrease in productivity of short fibers can be suppressed because occurrence of thread breakage is well prevented in a production process of the short fibers; and deterioration of a fuel consumption rate of a vehicle on which the pneumatic tires are mounted can be suppressed because an increase in rolling resistance due to increase in tire weight is well suppressed in this case.

Further, a ratio (L/D) of length (L) with respect to diameter (D) of each short fiber is in the range of $5 \leq L/D \leq 2000$ in yet another preferable embodiment of the pneumatic tire of the present invention. A good effect of reducing cavity resonance can be obtained and tangling of the short fibers can be prevented from occurring in a satisfactory manner, thereby allowing a noise-absorbing effect to be sufficiently demonstrated, in this case.

It is preferable that the short fibers in a region where the short fibers are fixedly provided, of the inner peripheral surface, are constituted of plural short fiber groups, which groups are fixedly attached, independent of each other, to the inner peripheral surface in the region in the pneumatic tire of the present invention. If some of the short fiber groups thus attached come off, such a coming-off area does not spread widely but is kept very small, thereby successfully maintaining the good effect of suppressing cavity resonance, in this case.

A method for manufacturing the pneumatic tire of the present invention is a method for manufacturing a pneumatic tire at least having: a tread portion including a belt constituted of at least one belt layer; and a bead portion, wherein the innermost belt layer in the tire radial direction of the belt has a width BW in the tire widthwise direction, and the pneumatic tire in a cross sectional view in the widthwise direction thereof is constituted of: the tire central region extending to be symmetrical with respect to the tire equatorial plane and having a width of 1/2 x BM in the tire widthwise direction; and respective tire side regions each extending from each outer end in the tire widthwise direction of the tire central region to a corresponding inner end in the tire radial direction of the bead portion, the method comprising: coating an inner peripheral surface of each tire side region with an adhesive; and attaching short fibers to the inner peripheral surface thus coated with the adhesive.

According to the method for manufacturing the pneumatic tire of the present invention, it is possible to efficiently manufacture a pneumatic tire capable of causing a good noise-absorbing effect.

The short fibers are provided at the inner peripheral surface of each tire side region by an electrostatic flocking process in a preferable embodiment of the method for manufacturing the pneumatic tire of the present invention. A pneumatic tire capable of causing a good noise-absorbing effect can be effectively manufactured by an electrostatic flocking process because short fibers are then easily fixed to the inner peripheral surface of the tire in a state where the short fibers stand upright thereon. Advantageous Effect of the Invention

According to the present invention, it is possible to provide by a simple manufacturing process a pneumatic tire in which: short fibers are fixed to at least a portion of an inner peripheral surface thereof; proportion of a short fiber-fixed area in each tire side region thereof is set to be higher than proportion of a short fiber-fixed area in the central region thereof; cavity resonance sound is reliably reduced; an increase in rolling resistance and deterioration of riding comfort are well suppressed; and absorption of a puncture sealing agent by the short fibers is well suppressed in puncture repair. Further, according to the present invention, it is possible to provide a method for easily manufacturing the pneumatic tire.

BRIEF DESCRIPTION OF THE DRAWINGS

FIG. 1 is a cross sectional view in the widthwise direction of a pneumatic tire according to one embodiment of the present invention.

FIG. 2 is a diagram showing measurement results of Example 1, Comparative Example 1 and Comparative Example 2.

FIG. 3 is a cross sectional view in the widthwise direction of a pneumatic tire relevant to Comparative Example 4 and Comparative Example 5.

FIG. 4 is a cross sectional view in the widthwise direction of a pneumatic tire relevant to Example 27 and Example 30.

FIG. 5 is a cross sectional view in the widthwise direction of a pneumatic tire relevant to Example 29.

FIG. 6A is a graph showing a relationship between short fiber-fixed area and required amount of puncture sealing agent for Comparative Example 3, Comparative Example 4, and Examples 27 to 29.

FIG. 6B is a graph showing a relationship between short fiber-fixed area and required amount of puncture sealing agent for Comparative Example 3, Comparative Example 5, and Examples 30 and 31.

FIG. 7A is a graph showing a relationship between required amount of puncture sealing agent and magnitude of decrease in sound pressure peak in the vicinity of 235 Hz for Comparative Example 3, Comparative Example 4 and Examples 27 to 29.

FIG. 7B is a graph showing a relationship between required amount of puncture sealing agent and magnitude of decrease in sound pressure peak in the vicinity of 235 Hz for Comparative Example 3, Comparative Example 5 and Examples 30 and 31.

DESCRIPTION OF THE EMBODIMENTS

The present invention will be described in detail with reference to the drawings hereinafter. FIG. 1 is a cross sectional view in the widthwise direction of a pneumatic tire according to one embodiment of the present invention. The pneumatic tire shown in FIG. 1 has a pair of bead portions 1; a pair of sidewall portions 2; a tread portion 3 continuous with the respective sidewall portions 2; a carcass 4 constituted of one carcass ply extending in a toroidal shape across the pair of bead portions 1 for reinforcing the bead portions 1, the sidewall portions 2 and the tread portion 3; a belt 5 constituted of two belt layers disposed on the outer side in the tire radial direction of the carcass 4 in the tread portion 3; a belt reinforcing (single) layer 6 disposed on the outer side in the tire radial direction of the belt 5; a bead filler 8 provided on the outer side in the tire radial direction of a bead core 7 embedded in each of the bead cores 1; and an inner liner 9 disposed on the (tire) inner peripheral surface side of the carcass 4.

The carcass 4 of the example shown in FIG. 1 is constituted of a single carcass ply and has a main body portion extending in a toroidal shape across the pair of bead cores 7 and a turn-up portion wound around each bead core 7 from the inner side toward the outer side in the tire widthwise direction then toward the outer side in the radial direction of the tire. The number of ply and the structure thereof of the carcass 4, however, are not limited to those in the aforementioned example in the pneumatic tire of the present invention. The bead filler 8 is provided between the main body portion and each turn-up portion of the carcass in the pneumatic tire of the example shown in FIG. 1.

The belt 5 constituted of two belt layers is disposed on the outer side in the tire radial direction of a crown portion of the carcass 4 in the tread portion 3 of the pneumatic tire of the example shown in FIG. 1. These belt layers are generally steel cord layers coated with rubber and extending to be inclined with respect to the tire equatorial plane E. The two belt layers of the example shown in FIG. 1 are laminated such that steel cords constituting one belt layer intersect steel cords constituting the other belt layer with respect to the tire equatorial plane E, to together constitute the belt 5. The belt 5 shown in FIG. 1 has a structure which is symmetrical with respect to the tire equatorial plane E. The innermost belt layer in the tire radial direction has a width BM in the tire widthwise direction. The tire central region" of the tire is defined as a region extending to be symmetrical with respect to the tire equatorial plane E and having a width of 1/2 x BM in the tire widthwise direction. The tire widthwise direction width BM of the innermost belt layer in the tire radial direction is preferably 60% to 90% of the maximum width of the tire in the present invention. The number of the belt layers constituting the belt 5 may be three or more in the pneumatic tire of the present invention, although the belt 5 shown in FIG. 1 is constituted of two belt layers. The pneumatic tire of the present invention may lack any belt reinforcing layer or may have two or more belt reinforcing layers depending on applications, although the pneumatic tire shown in FIG. 1 has the belt reinforcing single layer 6 disposed on the outer side in the tire radial direction of the belt 5.

Short fibers 10 are fixedly attached to an inner peripheral surface of the tire or a portion of the inner liner 9 on the tire inner peripheral surface side thereof in the pneumatic tire shown in FIG. 1. Provided in a cross section in the widthwise direction of the tire that: the tire central region C is a region extending to be symmetrical with respect to the tire equatorial plane E and having a width of 1/2 x BM in the tire widthwise direction (i.e. a region extending to be symmetrical with respect to the tire equatorial plane E toward respective sides in the tire widthwise direction by 1/4 x BM each); and a tire side region S is a region extending from each outer end in the tire widthwise direction of the tire central region C to a corresponding inner end in the tire radial direction of the bead portion 1 (i.e. respective regions other than the tire central region C, of the tire), the tire central region C and each tire side region S satisfy a relationship represented by following formula (1) in the inner peripheral surface (the inner peripheral surface of the inner liner 9 in FIG. 1) of the tire.

$$\text{Short fiber-fixed area in the tire central region/Area of the tire central region} < \text{Short fiber-fixed area in each tire side region/Area of each tire side region} \quad \cdots (1)$$

An inner surface of an air chamber formed when the tire is assembled with a rim has the short fibers 10 provided thereon because the short fibers 10 are fixedly attached in advance to at least a portion of the inner peripheral surface of the tire in the pneumatic tire of the present invention. These short fibers 10 fixed to the tire inner peripheral surface absorb cavity resonance sound. That is, it is possible to reduce noise attributed to the cavity resonance phenomenon by the short fibers 10.

The tire central region C having larger radius of rotation makes larger contribution to an increase in rolling resistance, when the tire weight increases, than the tire side region S having smaller radius of rotation in a pneumatic tire in general. However, in the pneumatic tire of the present invention, proportion of a short fiber-fixed area in the central region C of the tire, i.e. [Short fiber-fixed area in the inner peripheral surface of the tire central region C/Area of the inner peripheral surface of the tire central region C], is set to be smaller than proportion of a short fiber-fixed area in each tire side region S of the tire, i.e. [Short fiber-fixed area in the inner peripheral surface of each tire side region S/Area of the inner peripheral surface of each tire side region S], as prescribed by formula (1), whereby an increase in rolling resistance by an increase in tire weight is well suppressed.

Further, an increase in rigidity of the tread portion 3 is suppressed relatively well and thus deterioration of riding comfort of a vehicle on which the tires are mounted is suppressed, as well, because proportion of a short fiber-fixed area in the central region C is set to be smaller than proportion of a short fiber-fixed area in each tire side region S in the inner peripheral surface of the tire as described above.

Yet further, absorption of a puncture sealing agent by the short fibers at the inner peripheral surface of the tire central region C is suppressed when the puncture repair is carried out by using the puncture sealing agent and thus deterioration of fluidity of the puncture sealing agent, i.e. deterioration of repair efficiency, can be suppressed because proportion of a short fiber-fixed area in the central region C is set to be smaller than proportion of a short fiber-fixed area in each tire side region S in the inner peripheral surface of the tire as described above.

Examples of the short fibers 10 include short fibers of organic synthetic fibers, inorganic fibers, regenerated fibers, natural fibers and the like. Examples of organic synthetic fibers include those made of: polyolefin such as polyethylene, polypropylene, polybutylene and the like; aliphatic polyamide such as nylon; aromatic polyamide such as Kevlar; polyester such as polyethylene terephthalate, polyethylene naphthalate, poly(ethylene succinate), polymethyl methacrylate; syndiotactic 1,2-polybutadiene; acrylonitrile-butadine-styrene copolymer; polystyrere; and copolymers of these polymers. Examples of inorganic fibers include carbon fiber, glass fiber and the like. Examples of regenerated fibers include rayon, cupro and the like. Examples of natural fiber include cotton, silk, wool and the like.

It is preferable that the short fibers 10 are fixed exclusively to the tire side regions S in the inner peripheral surface in the pneumatic tire of the present invention. An increase in rolling resistance and deterioration of riding comfort can be reliably suppressed in the case where the short fibers 10 are fixed exclusively to the inner peripheral surface of the tire side regions S of the tire because the short fibers 10 are then not existent in the inner peripheral surface of the tire central region C making relatively large contribution to an increase in rolling resistance and deterioration of riding comfort. Further, absorption of a puncture sealing agent by the short fibers can be reliably suppressed during puncture repair in this case because the short fibers 10 are not provided in the inner peripheral surface of the tire central region C.

It is preferable in the pneumatic tire of the present invention that the short fibers 10 are fixed exclusively to each region, on outer side in the tire widthwise direction of the innermost belt layer in the tire radial direction of the belt, of the inner peripheral surface of the tire, i.e. each region ranging from an "intersection line" to a corresponding inner end 1A in the tire radial direction of the bead portion 1, provided that an "intersection line" is a line of intersection between the inner peripheral surface of the tire and a plane passing through the outer end in the tire widthwise direction of the innermost belt layer in the tire radial direction and in parallel with the tire equatorial line E (if a plurality of such "intersection lines" exists, the intersection line closest to the outer end in the tire widthwise direction of the innermost belt layer in the tire radial direction). Absorption of a puncture sealing agent by the short fibers 10 can be reliably suppressed in puncture repair because no short fibers 10 are provided on the inner side in the tire widthwise direction of the radially innermost belt layer, of the inner peripheral surface of the tire, in the aforementioned case where the short fibers 10 are fixed exclusively to each region, on outer side in the tire widthwise direction of the innermost belt layer in the tire radial direction of the belt, of the inner peripheral surface of the tire. Further, as compared with the tire having no short fibers fixedly provided therein, it is possible to significantly reduce cavity resonance sound of the tire without so much increase in a required amount of a puncture sealing agent in this case.

It is preferable in the pneumatic tire of the present invention that a ratio of an area of a sub-region where the short fibers 10 are fixedly provided, of each tire side region S/the whole area of the tire side region S is ≥ 50% in the inner peripheral surface of the tire. Cavity resonance of the tire can be reliably reduced by setting the aforementioned ratio to be ≥ 50%.

In the pneumatic tire of the present invention, the short fibers are fixedly attached preferably at a density of 100 fibers/$cm^2$ or more, more preferably at a density of 1000 fibers/$cm^2$ or more, and further more preferably at a density in the range of 10,000 to 50,000 fibers/$cm^2$ (inclusive of 10,000 fibers/$cm^2$ and 50,000 fibers/$cm^2$) in the sub-region where the short fibers 10 are fixed to the tire inner peripheral surface, of each tire side region S. Too low density of the short fibers decreases an effect of reducing cavity resonance. It is therefore preferable that the short fibers are fixedly attached in the sub region of each tire side region S at a density of 100 fibers/$cm^2$ or more (on average) in order to reliably obtain the effect of reducing cavity resonance.

Further, the average length of the short fibers is preferably in the range of 0.5 mm to 10 mm and more preferably in the range of 2 mm to 8 mm in the pneumatic tire of the present invention. The average length of the short fibers < 0.5 mm decreases an effect of reducing cavity resonance sound. The average length of the short fibers > 10 mm facilitates tangling between the short fibers, which tangling may inhibit satisfactory demonstration of the noise-absorbing effect.

Yet further, the average diameter of the short fibers is preferably in the range of 1 μm to 500 μm in the pneumatic tire of the present invention. The average diameter of the short fibers < 1 μm facilitates frequent thread breakage in a production process of the short fibers, thereby decreasing productivity of the short fibers. The average diameter of the short fibers > 500 μm increases the tire weight to a level affecting rolling resistance of the tire, thereby possibly deteriorating a fuel consumption rate of a vehicle on which the pneumatic tires of the present invention are mounted.

Yet further, a ratio (L/D) of length (L) with respect to diameter (D) of each short fiber is preferably in the range of 5 ≤ L/D ≤ 2000 in the pneumatic tire of the present invention. The ratio (L/D) < 5 decreases an effect of reducing cavity resonance sound. The ratio (L/D) > 200 facilitates tangling between the short fibers, which tangling may inhibit satisfactory demonstration of the noise-absorbing effect.

Yet further, it is preferable in the pneumatic tire of the present invention that the short fibers provided in a short fiber-fixed sub-region of each tire side region (the sub-region may cover the entire tire side region as shown in FIG. 1) is constituted of plural short fiber groups, which groups are fixedly attached, independent of each other, to the inner peripheral surface in the sub-region. If some of the short fiber groups thus attached come off, such a coming-off area does not spread widely but is kept very small, thereby successfully maintaining the good effect of suppressing cavity resonance, because the plural short fiber groups are independently attached in this case.

A method for manufacturing the pneumatic tire of the present invention is a method for manufacturing a pneumatic tire at least having: a tread portion 3 including a belt 5 constituted of at least one belt layer; and a bead portion 1, wherein the innermost belt layer in the tire radial direction of the belt 5 has a width BW in the tire widthwise direction, and the pneumatic tire in a cross sectional view in the widthwise direction thereof is constituted of: the tire central region C extending to be symmetrical with respect to the tire equatorial plane E and having a width of 1/2 x BM in the tire widthwise direction; and respective tire side regions S each extending from each outer end in the tire widthwise direction of the tire central region C to a corresponding inner end 1A in the tire radial direction of the bead portion 1, the method comprising: (i) coating an inner peripheral surface of each tire side region S with an adhesive; and (ii) attaching short fibers 10 to the inner peripheral surface thus coated with the adhesive.

According to the method for manufacturing the pneumatic tire of the present invention, it is possible to efficiently manufacture a pneumatic tire capable of causing a good noise-absorbing effect as described above by first coating a portion where short fibers are to be attached, of an inner peripheral surface of each tire side region S, with an adhesive and then attaching short fibers 10 to the portion of the inner peripheral surface thus coated with the adhesive. Types of an adhesive to be used in the present invention is not particularly limited and any adhesive appropriate for the purpose can be used.

The short fibers 10 are preferably attached to the inner peripheral surface of each tire side region S by an electrostatic flocking process in the method for manufacturing the pneumatic tire of the present invention. The short fibers 10 can be attached to the inner peripheral surface of the tire by various methods, of course. However, a pneumatic tire capable of causing a good noise-absorbing effect can be effectively manufactured by an electrostatic flocking process because then the short fibers 10 can be easily fixed to the inner peripheral surface of the tire in a state where the short fibers 10 stand upright thereon.

An electrostatic flocking process is a processing technique of electrically charging short fibers and attaching by electrostatic force the short fibers thus electrically charged to an object coated in advance with an adhesive, such that the short fibers fixedly stand upright on the object. The electrostatic flocking process can attach short fibers uniformly to an object having a complicated shape and therefore is suitable for attaching the short fibers 10 to an inner peripheral surface having three-dimensional radii of curvature, of a tire.

The pneumatic tire of the present invention described above is generally assembled with a rim and a resulting tire-rim assembly is mounted on a desired vehicle for use. It is acceptable to fixedly attach short fibers to at least a portion of the rim surface, as well, so that the effect of reducing cavity resonance of the tire is further enhanced.

Examples

The present invention will be described further in detail hereinafter by Examples, which impose no restriction on the scope of the present invention.

<Example 1 and Comparative Examples 1 and 2>

A test tire in which short fibers were provided by an electrostatic flocking process in the respective tire side regions of an inner peripheral surface thereof (Example 1), a test tire in which no short fibers were provided in an inner peripheral surface thereof (Comparative Example 1), and a test tire in which short fibers were provided by an electrostatic flocking process in the whole inner peripheral surface thereof (Comparative Example 2), were prepared, respectively, by using tires sharing the same specification in other details. Car interior noise of an actual car was measured for each of the test tires by a method described below.

About 20g of short fibers made of nylon (fiber thickness: 15 denier = $\phi$ 45$\mu$ m, fiber length: 2.5 mm) were attached by an electrostatic flocking process to the inner peripheral surface of the respective tire side regions in the test tire of Example 1 (approximately 20,000 short fibers/$cm^2$). A ratio of an area where the short fibers are fixedly attached to the inner peripheral surface of the tire central region/the entire area of the inner peripheral surface of the tire central region is 0% in the Example 1 tire. On the other hand, a ratio of an area where the short fibers are fixedly attached to the inner peripheral surface of each tire side region/the entire area of the inner peripheral surface of each tire side region is 75% in the Example 1 tire. The short fiber-fixed region of each tire side region is divided into four short fiber groups in the Example 1 tire.

About 40g of short fibers made of nylon (fiber thickness: 15 denier = $\phi$ 45 $\mu$m, fiber length: 2.5 mm) were attached by an electrostatic flocking process to the whole inner peripheral surface of the tire in the test tire of Comparative Example 2 (approximately 20,000 short fibers/$cm^2$).

The tires used for preparation of the test tires were commercially available products having the structure as shown in FIG. 1 (size: 205/55R16, application rim: 6.5JJ-16). The width BW in the tire widthwise direction of the innermost belt layer in the tire radial direction was 78% of the maximum with of the tire.

Car interior noise was measured by: mounting each of the test tires on a passenger car (2000cc class); driving the car, with one occupant therein, on a rough asphalt road at 50 km/hour; and measuring noise by an microphone placed in the vicinity of ears of the driver. Frequency spectrum data thus obtained are shown in FIG. 2.

Peaks observed in the vicinities of 225 Hz and 235 Hz in FIG. 2 correspond to cavity resonance. It is understood from FIG. 2 that a good noise-reducing effect (reduction of approximately 2 to 5 dB) was obtained in the Example 1 tire. It is also understood from FIG. 2 that the Example 1 tire where short fibers were provided exclusively to the inner peripheral surfaces of the respective tire side regions of the tire causes a good noise-reducing effect equivalent to the Comp. Example 2 tire where short fibers were provided in the whole inner peripheral surface of the tire.

<Examples 2 to 4>

Test tires of Examples 2 to 4 were prepared in the same manner as in Example 1, except that the proportion of an area of a sub-region where the short fibers are fixedly attached to the inner peripheral surface, of each tire side region, with respect to the entire area of the inner peripheral surface of each tire side region was changed as shown in Table 1 in the former. Car interior noise was measured for each of the test tires by the method described above. Magnitude of decrease in sound pressure at the peak in the vicinity of 235 Hz (the noise-reducing effect is most conspicuously observed at the peak) of each of the test tires is shown in Table 1 as an index value relative to the result of Comp. Example 1 as the reference.

Table 1

| | (Short fiber-fixed area in each tire side region/Area of each tire side region) × 100 | Magnitude of decrease in sound pressure at the peak in the vicinity of 235 Hz [dB(A)] |
|---|---|---|
| Example 2 | 100 | 5.2 |
| Example 1 | 75 | 4.2 |
| Example 3 | 50 | 3.6 |
| Example 4 | 25 | 1.0 |

It is understood from the results shown in Table 1 that a ratio of an area of a sub-region where the short fibers 10 are fixedly provided, of each tire side region S/the area of the tire side region S is preferably ≥ 50% in the inner peripheral surface of a tire in terms of satisfactorily reducing cavity resonance sound of the tire.

<Examples 5 to 8>

Test tires of Examples 5 to 8 were prepared in the same manner as in Example 1, except that the number of the short fibers per $cm^2$ was changed as shown in Table 2 in the former. Car interior noise was measured for each of the test tires by the method described above. Magnitude of decrease in sound pressure at the peak in the vicinity of 235 Hz (the noise-reducing effect is most conspicuously observed at the peak) of each of the test tires is shown in Table 2 as an index value relative to the result of Comp. Example 1 as the reference.

Table 2

| | The number of short fibers per $cm^2$ | Magnitude of decrease in sound pressure at the peak in the vicinity of 235 Hz [dB(A)] |
|---|---|---|
| Example 1 | 20000 | 4.2 |
| Example 5 | 10000 | 3.8 |
| Example 6 | 1000 | 3.2 |
| Example 7 | 100 | 1.5 |
| Example 8 | 50 | 0.5 |

It is understood from the results shown in Table 2 that the number of the short fibers per $cm^2$ is preferably 100 fibers/$cm^2$ or more, and more preferably 1000 fibers/$cm^2$ or more, in terms of satisfactorily reducing cavity resonance sound of a tire.

<Examples 9 to 14>

Test tires of Examples 9 to 14 were prepared in the same manner as in Example 1, except that the average length of the short fibers for use was changed as shown in Table 3 in the former. Car interior noise was measured for each of the test tires by the method described above. Magnitude of decrease in sound pressure at the peak in the vicinity of 235 Hz (the noise-reducing effect is most conspicuously observed at the peak) of each of the test tires is shown in Table 3 as an index value relative to the result of Comp. Example 1 as the reference.

Table 3

| | The average length of short fibers [mm] | Magnitude of decrease in sound pressure at the peak in the vicinity of 235 Hz [dB(A)] |
|---|---|---|
| Example 9 | 12 | 1.3 |
| Example 10 | 10 | 3.8 |
| Example 11 | 8 | 5.5 |
| Example 12 | 4 | 4.9 |
| Example 1 | 2.5 | 4.2 |
| Example 13 | 2 | 4.0 |
| Example 14 | 0.5 | 2.2 |

It is understood from the results shown in Table 3 that: a good effect of reducing cavity resonance sound of a tire is obtained in the case where the average length of the short fibers provided therein is in the range of 0.5 mm to 10 mm; and that cavity resonance sound of the tire can be significantly reduced in the case where the average length of the short fibers provided therein is in the range of 2 mm to 8 mm.

<Examples 15 to 20>

Test tires of Examples 15 to 20 were prepared in the same manner as in Example 1, except that a ratio (L/D) of length (L) with respect to diameter (D) of each short fiber for use was changed as shown in Table 4 in the former. Car interior noise was measured for each of the test tires by the method described above. Magnitude of decrease in sound pressure at the peak in the vicinity of 235 Hz (the noise-reducing effect is most conspicuously observed at the peak) of each of the test tires is shown in Table 4 as an index value relative to the result of Comp. Example 1 as the reference.

Table 4

| | Ratio (L/D) of length (L) with respect to diameter (D) of short fiber | Magnitude of decrease in sound pressure at the peak in the vicinity of 235 Hz [dB(A)] |
|---|---|---|
| Example 15 | 2500 (L = 12.5mm, D = 0.005mm) | 1.0 |
| Example 16 | 2000 (L = 10mm, D = 0.005mm) | 5.6 |
| Example 17 | 100 (L = 10mm, D = 0.1mm) | 5.4 |
| Example 1 | 56 (L = 2.5mm, D = 0.045mm) | 4.2 |
| Example 18 | 10 (L = 1mm, D = 0.1mm) | 2.8 |
| Example 19 | 5 (L = 1mm, D = 0.2mm) | 2.6 |
| Example 20 | 3 (L = 0.3mm, D= 0.1mm) | 0.7 |

It is understood from the results shown in Table 4 that cavity resonance sound of a tire can be significantly reduced by setting the ratio (L/D) thereof to be in the range of 5 to 2000.

<Examples 21 to 26>

Test tires of Examples 21 to 26 were prepared in the same manner as in Example 1, except that the average diameter of the short fibers for use was changed as shown in Table 5 in the former. Car interior noise was measured for each of the test tires by the method described above. Magnitude of decrease in sound pressure at the peak in the vicinity of 235 Hz (the noise-reducing effect is most conspicuously observed at the peak) of each of the test tires is shown in Table 5 as an index value relative to the result of Comp. Example 1 as the reference.

Further, rolling resistance of each of the test tires was measured by: rotating a drum of a drum-type tire tester in a state where the test tire was in contact with the drum; turning off the drum-driving switch when the rotation speed of the drum increased to a certain speed, to allow the drum to rotate freely thereafter; and determining rolling resistance of the test tire based on a decrease in speed of the drum. The rolling resistance of the test tire thus determined is expressed by an index value relative to the rolling resistance of Comp. Example 1 being "100". The smaller index value represents the smaller, i.e. better rolling resistance.

Table 5

| | The average diameter of short fibers [μm] | Magnitude of decrease in sound pressure at the peak in the vicinity of 235 Hz [dB(A)] | Rolling resistance [Index value] |
|---|---|---|---|
| Comp. Example 1 | No short fiber | 0.0 (Reference) | 100 (Reference) |
| Example 21 | 1 | 1 | 100 |
| Example 22 | 5 | 2.9 | 100 |
| Example 23 | 20 | 3.1 | 100 |
| Example 1 | 45 | 4.2 | 101 |
| Example 24 | 100 | 3.8 | 103 |
| Example 25 | 500 | 3.6 | 105 |
| Example 26 | 600 | 3.2 | 110 |

It is understood from the results shown in Table 5 that it is possible to significantly reduce cavity resonance sound of a tire, while suppressing an increase in rolling resistance thereof, by setting the average diameter of the short fibers provided therein to be in the range of 5 μm to 500 μm.

<Examples 27 to 29, Comparative Examples 3 and 4>

Test tires of Examples 27 to 29, Comparative Examples 3 and 4 each having size; 235/50R18 were prepared in the same manner as in Example 1, except that the short fibers having the average length 4 mm were used and the regions where the short fibers were fixedly attached to a tire inner peripheral surface were changed as shown in FIG. 3, FIG. 4, FIG. 1 and FIG. 5, respectively, in the former. A test tire having no short fibers provided at an inner peripheral surface thereof (Comp. Example 3) was also prepared for comparison.

A substantially whole inner peripheral surface, except for regions ranging from respective inner ends in the tire radial direction of the bead portions to 15 mm on the outer side in the tire radial direction therefrom, is provided with short fibers in the test tire having the structure as shown in FIG. 3 (Comp. Example 4).

The short fibers are fixedly attached in regions other than: regions ranging from respective inner ends in the tire radial direction of the bead portions to 15 mm on the outer side in the tire radial direction therefrom; and a region extending to be symmetrical with respect to the tire equatorial plane and having a width of 190 mm in the tire widthwise direction (i.e. a region extending, to be symmetrical with respect to the tire equatorial plane, toward respective sides in the tire widthwise direction by 95 mm each), of the tire inner peripheral surface, in the test tire having the structure as shown in FIG. 4 (Example 27). The short fiber-fixed area of the FIG. 4 tire is 44% of that of the FIG. 3 tire.

The short fibers are fixedly attached in regions other than: regions ranging from respective inner ends in the tire radial direction of the bead portions to 15 mm on the outer side in the tire radial direction therefrom; and a region extending to be symmetrical with respect to the tire equatorial plane and having a width of 100 mm in the tire widthwise direction (i.e. a region extending, to be symmetrical with respect to the tire equatorial plane, toward respective sides in the tire widthwise direction by 50 mm each), of the tire inner peripheral surface, in the test tire having the structure as shown in FIG. 1 (Example 28). The short fiber-fixed area of the FIG. 1 tire is 70% of that of the FIG. 3 tire.

The test tire having the structure as shown in FIG. 5 (Example 29) is different from the FIG. 4 tire in that the short fibers are further provided in a region extending to be symmetrical with respect to the tire equatorial plane and having a width of 100 mm in the tire widthwise direction (i.e. a region extending, to be symmetrical with respect to the tire equatorial plane, toward respective sides in the tire widthwise direction by 50 mm each) in the former. The short fiber-fixed area of the FIG. 5 tire is 79% of that of the FIG. 3 tire.

A required amount of a puncture sealing agent was evaluated for each of the test tires by: making a hole in a tread portion of the tire and injecting a puncture sealing agent (puncture repair liquid) from the outside into the inside of the tire; inflating the tire thus repaired at a predetermined internal pressure; running the tire in a distance of approximately 5 km at a constant speed; removing the tire from a vehicle after the running of the tire, without toppling the tire down, and fixing the tire on a support in that state; and cutting sidewall portions, collecting the puncture sealing agent remaining inside the tire, and confirming how the puncture sealing agent had spread in the inner peripheral surface of the tread portion. The results are shown in Table 6 and FIG. 6A.

Table 6

| | Structure | Short fiber-fixed area [$m^2$] | Required amount of puncture sealing agent [g] |
|---|---|---|---|
| Comp. Example 3 | No short fiber | 0 | 250 |
| Example 27 | FIG. 4 | 0.32 | 300 |
| Example 28 | FIG. 1 | 0.51 | 400 |
| Example 29 | FIG. 5 | 0.57 | 750 |
| Comp. Example 4 | FIG. 3 | 0.72 | 950 |

Further, car interior noise was measured for each of the test tires of Comp. Examples 3, 4 and Examples 27 to 29 by the method described above. Magnitude of decrease in sound pressure at the peak in the vicinity of 235 Hz (the noise-reducing effect is most conspicuously observed at the peak) of each of these the test tires was compared to the result of Comp. Example 3 as the reference. A relationship between the required amount of a puncture sealing agent and the magnitude of decrease in sound pressure at the peak in the vicinity of 235 Hz thus determined are shown in FIG. 7A.

<Examples 30 and 31, Comparative Example 5>

Test tires of Examples 30, 31 and Comparative Example 5 were prepared in the same manner as in Examples 27, 28 and Comp. Example 4, except that short fibers having the average length of 2.5 mm were used in the former. A required amount of a puncture sealing agent was evaluated for each of the test tires by the method described above. The results are shown in Table 7 and FIG. 6B.

Table 7

| | Structure | Short fiber-fixed area [$m^2$] | Required amount of puncture sealing agent [g] |
|---|---|---|---|
| Comp. Example 3 | No short fiber | 0 | 250 |
| Example 30 | FIG. 4 | 0.32 | 250 |
| Example 31 | FIG. 1 | 0.51 | 300 |
| Comp. Example 5 | FIG. 3 | 0.72 | 650 |

Further, car interior noise was measured for each of the test tires of Comp. Example 5 and Examples 30, 31 by the method described above. Magnitude of decrease in sound pressure at the peak in the vicinity of 235 Hz (the noise-reducing effect is most conspicuously observed at the peak) of each of these the test tires was compared to the result of Comp. Example 3 as the reference. A relationship between the required amount of a puncture sealing agent and the magnitude of decrease in sound pressure at the peak in the vicinity of 235 Hz thus determined are shown in FIG. 7B.

It is understood from FIG. 6A and FIG. 6B that the tires of Example 28 and Example 31 where the short fibers are fixedly provided exclusively in the tire side regions of an inner peripheral surface thereof each require a relatively small amount of a puncture sealing agent in spite of a relatively large short fiber-fixed area (and good performance in noise reduction) thereof.

Further, it is understood from FIG. 7A and FIG. 7B that the tires of Example 27 and Example 30 where the short fibers are fixedly provided exclusively on the outer side in the tire widthwise direction of the radially innermost belt layer of the belt in an inner peripheral surface thereof can each reasonably reduce cavity resonance sound without so much increase in a required amount of a puncture sealing agent, as compared with the tire having no short fibers fixedly provided therein.

REFERENCE SIGNS LIST

1 Bead portion
1A Inner end in the tire radial direction of bead portion
2 Sidewall portion
3 Tread portion

4 Carcass
5 Belt
6 Belt reinforcing layer
7 Bead core
8 Bead filler
9 Inner liner
10 Short fiber
BW Width in the tire widthwise direction of innermost belt layer in the tire radial direction
E Tire equatorial plane
C Tire central region
S Tire side region

## Claims

**1.** A pneumatic tire at least having: a tread portion including a belt constituted of at least one belt layer; a bead portion; and an inner peripheral surface having short fibers fixed to at least a portion thereof, wherein the innermost belt layer in the tire radial direction of the belt has a width BW in the tire widthwise direction, **characterized in that:**

provided that, in a cross sectional view in the widthwise direction of the tire, the tire central region is a region extending to be symmetrical with respect to the tire equatorial plane and having a width of 1/2 x BM in the tire widthwise direction and a tire side region is a region extending from each outer end in the tire widthwise direction of the tire central region to a corresponding inner end in the tire radial direction of the bead portion, the tire central region and each tire side region satisfy a relationship represented by following formula (1) in the inner peripheral surface of the tire,

$$\text{Short fiber-fixed area in the tire central region/Area of the tire central region} < \text{Short fiber-fixed area in each tire side region/Area of each tire side region} \quad \cdots \ (1)$$

**2.** The pneumatic tire of claim 1, wherein the short fibers are fixed exclusively to the tire side regions of the inner peripheral surface.

**3.** The pneumatic tire of claim 1 or 2, wherein the short fibers are fixed exclusively to each region, on the outer side in the tire widthwise direction of the innermost belt layer in the tire radial direction of the belt, of the inner peripheral surface of the tire.

**4.** The pneumatic tire of any of claims 1 to 3, wherein a ratio of the short fiber-fixed area in each tire side region/the area of each tire side region is preferably ≥ 50% in the inner peripheral surface of the tire.

**5.** The pneumatic tire of any of claims 1 to 4, wherein the short fibers are fixedly attached at a density of 100 fibers/$cm^2$ or more in a sub-region where the short fibers are fixed to the tire inner peripheral surface, of each tire side region.

**6.** The pneumatic tire of any of claims 1 to 5, wherein the average length of the short fibers is in the range of 0.5 mm to 10.

**7.** The pneumatic tire of any of claims 1 to 6, wherein the average diameter of the short fibers is in the range of 1 μm to 500 μm.

**8.** The pneumatic tire of any of claims 1 to 7, wherein a ratio (L/D) of length (L) with respect to diameter (D) of each short fiber is in the range of $5 \leq L/D \leq 2000$.

**9.** The pneumatic tire of any of claims 1 to 8, wherein the short fibers in a region where the short fibers are fixedly provided, of the inner peripheral surface, are constituted of plural short fiber groups, which groups are fixedly attached, independent of each other, to the inner peripheral surface in the region.

**10.** A method for manufacturing a pneumatic tire at least having: a tread portion including a belt constituted of at least one belt layer; and a bead portion, wherein the innermost belt layer in the tire radial direction of the belt has a width BW in the tire widthwise direction, and the pneumatic tire in a cross sectional view in the widthwise direction thereof is constituted of: the tire central region extending to be symmetrical with respect to the tire equatorial plane and having a width of 1/2 x BM in the tire widthwise direction; and respective tire side regions each extending from each outer end in the tire widthwise direction of the tire central region to a corresponding inner end in the tire radial direction of the bead portion, the method comprising:

coating an inner peripheral surface of each tire side region with an adhesive; and
attaching short fibers to the inner peripheral surface thus coated with the adhesive.

**11.** The method for manufacturing a pneumatic tire of claim 10, further comprising providing the short fibers at the inner peripheral surface of each tire side region by an electrostatic flocking process.

FIG. 1

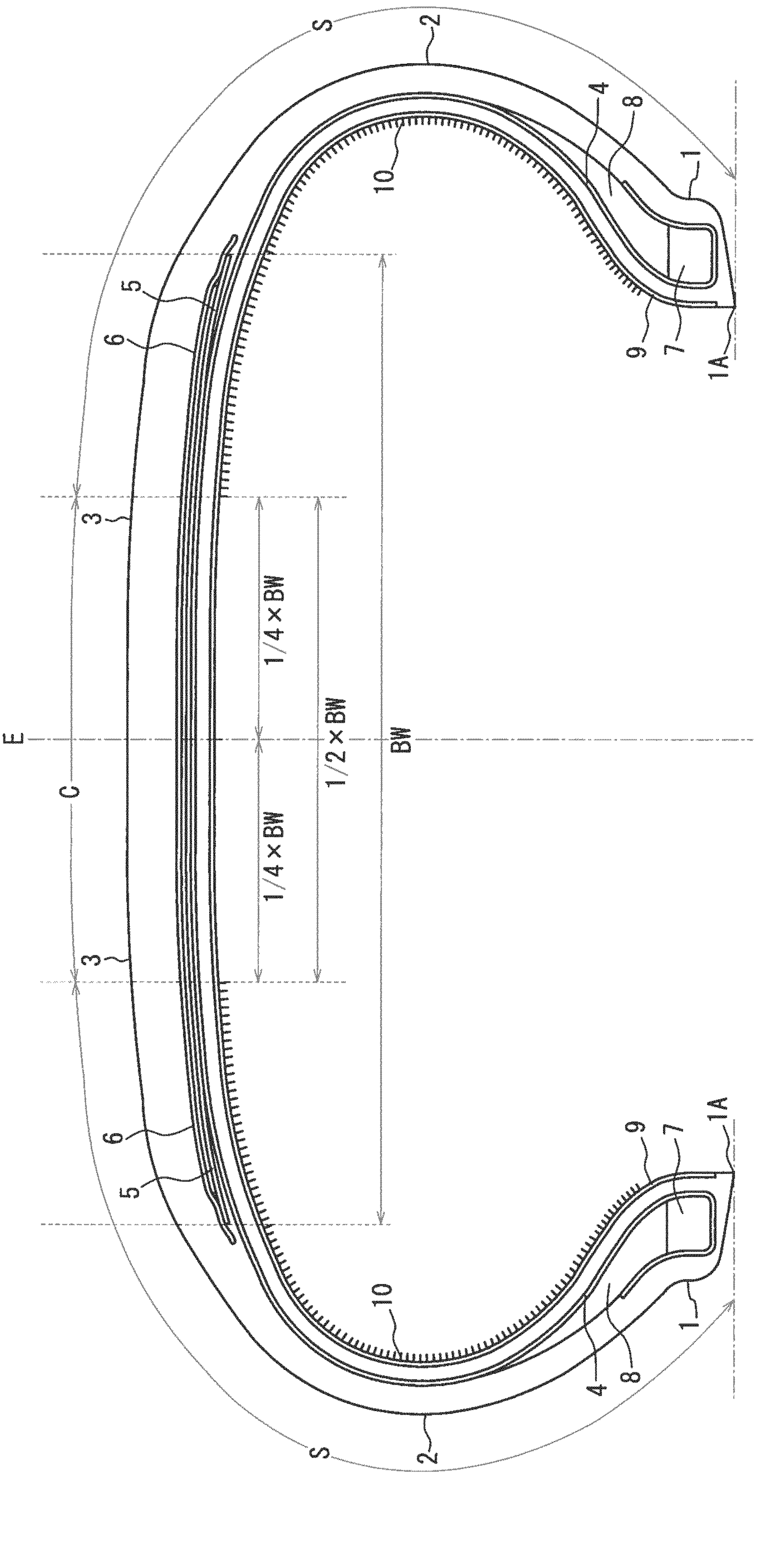

*FIG. 2*

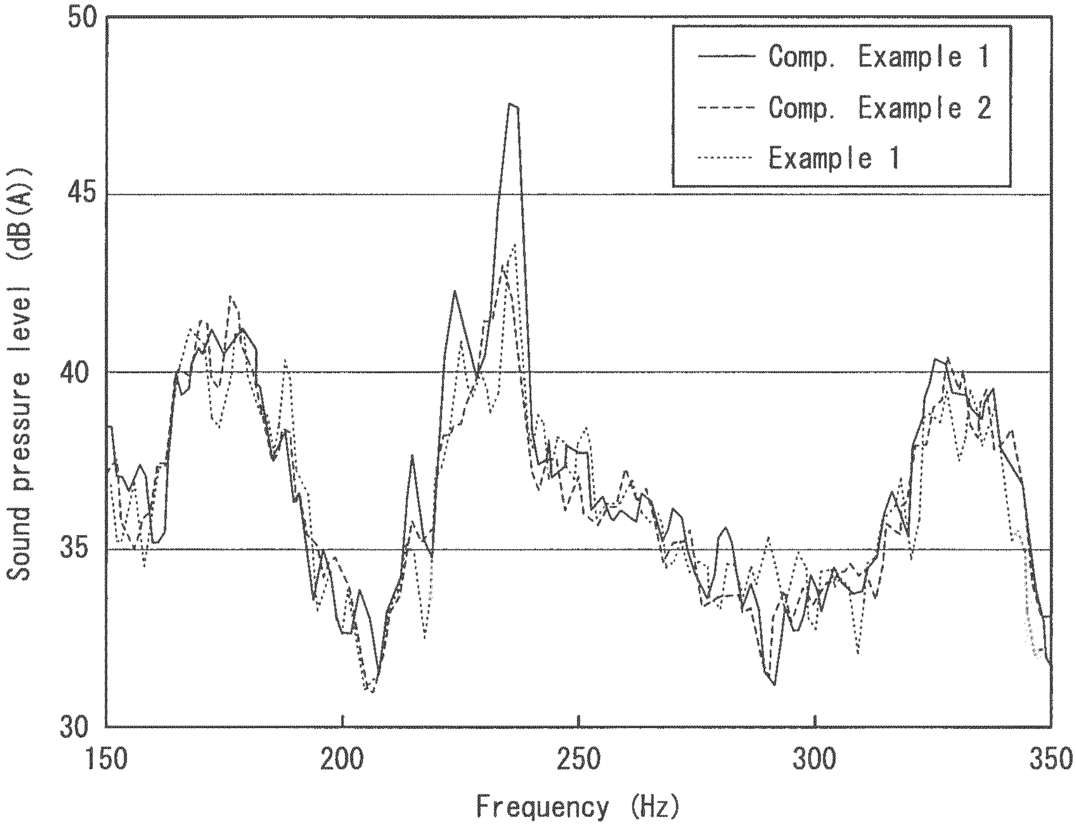
50
45
40
35
30
150
200
250
300
350
Sound pressure level (dB(A))
Frequency (Hz)
Comp. Example 1
Comp. Example 2
Example 1

FIG. 3

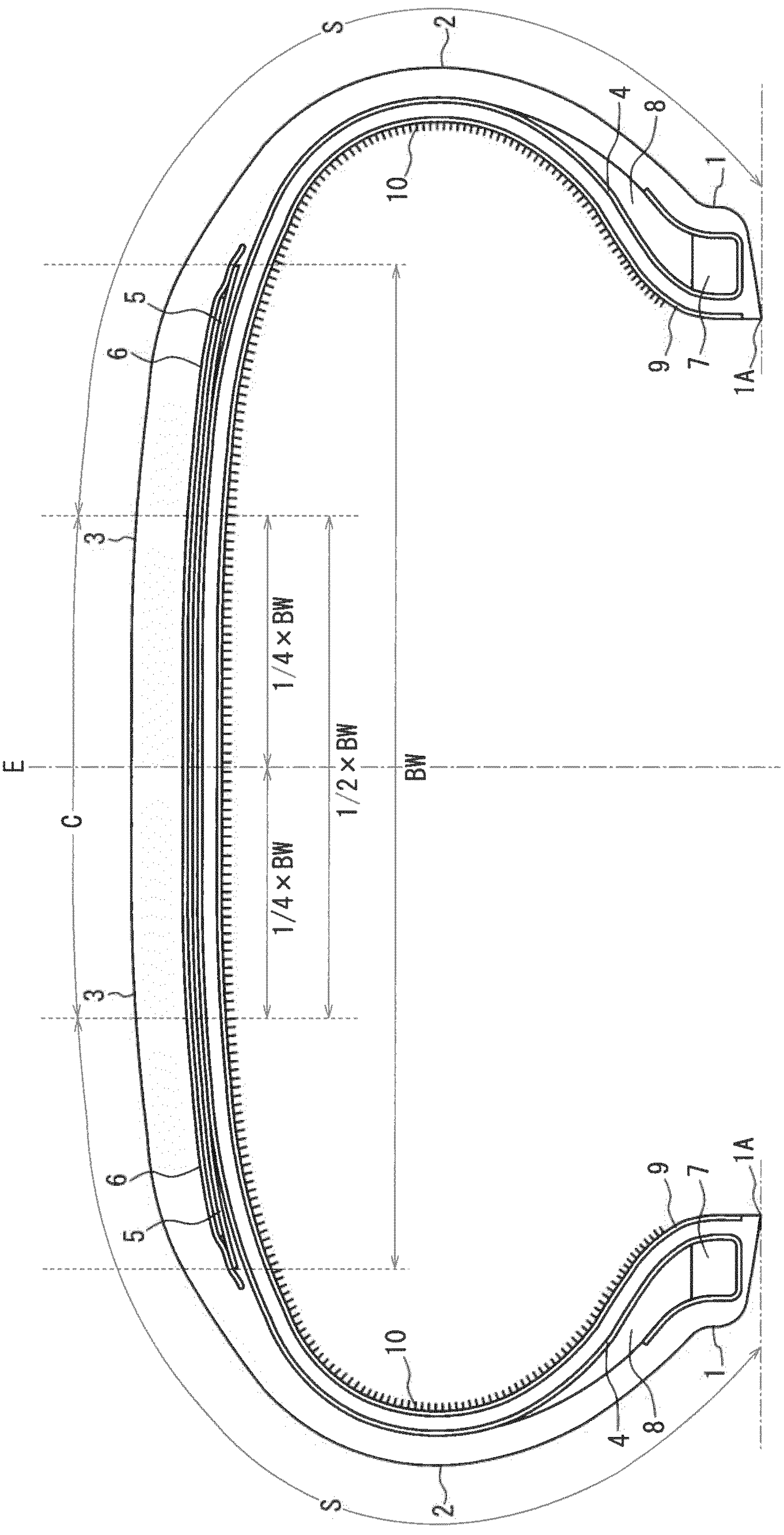

FIG. 4

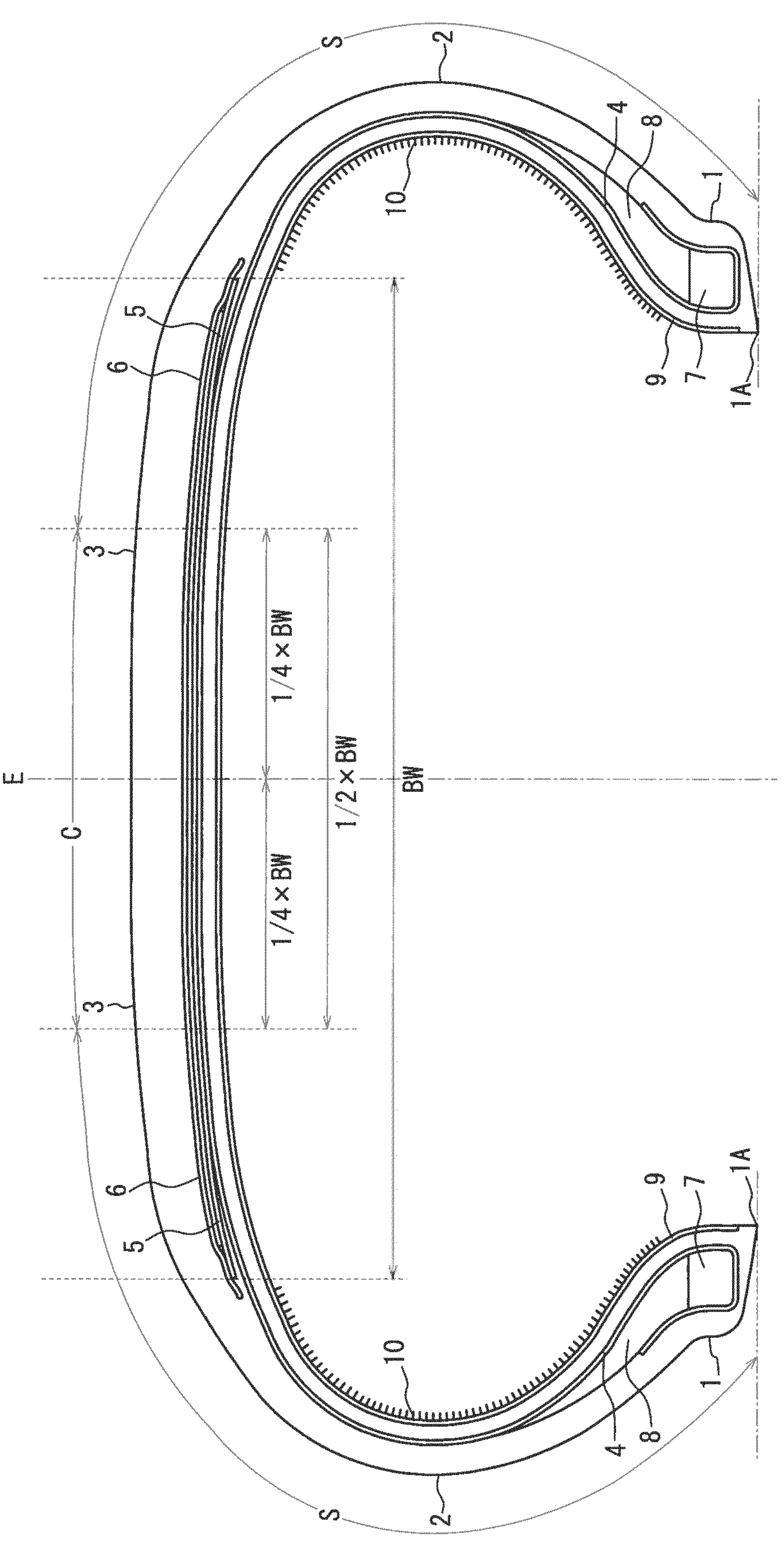

FIG. 5

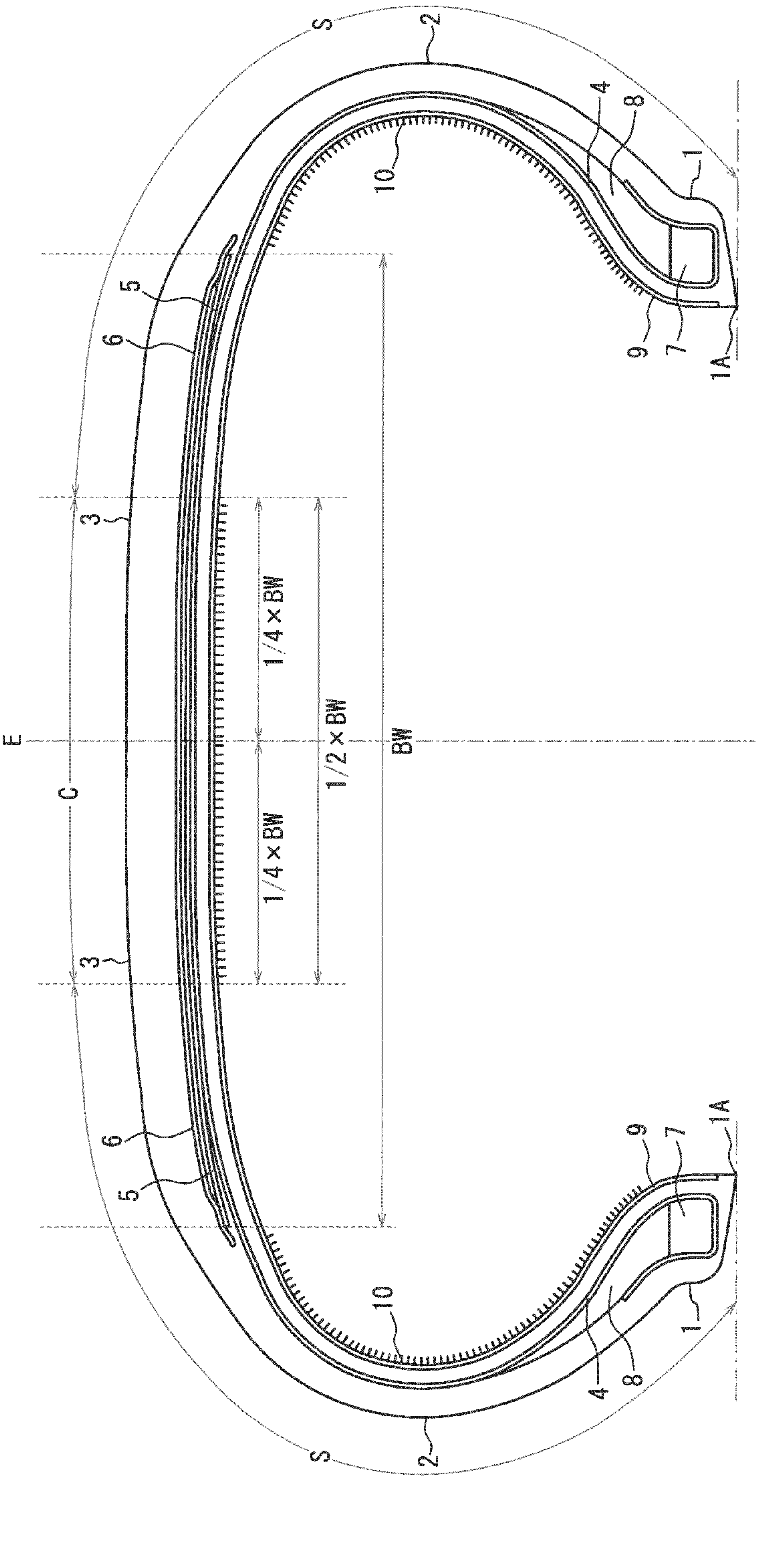

FIG. 6A

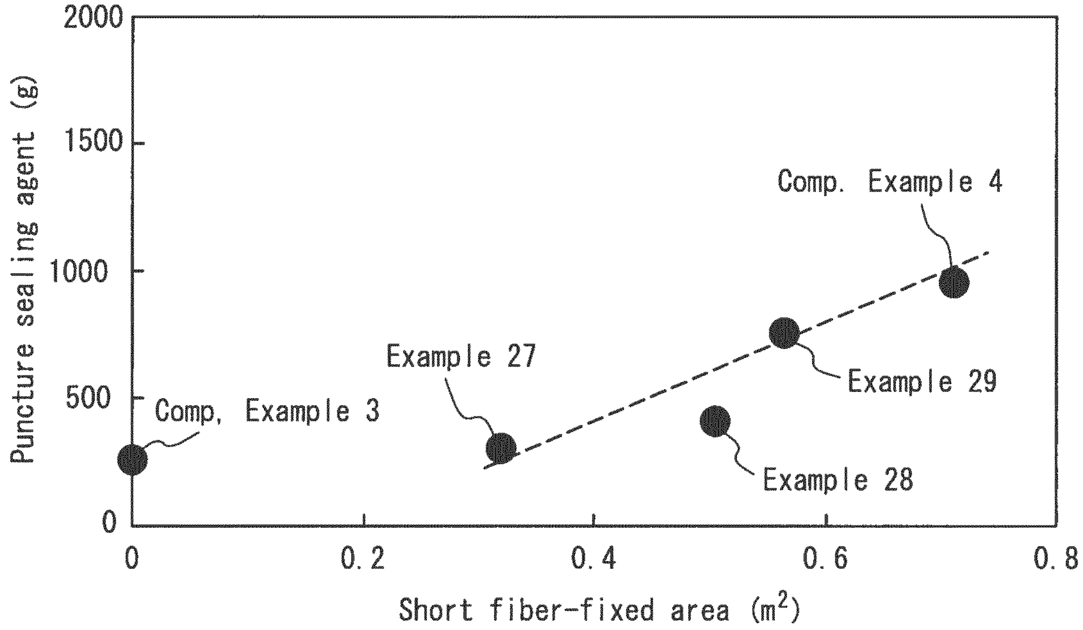
2000
1500
1000
500
0
Puncture sealing agent (g)
Comp. Example 4
Example 27
Example 29
Comp, Example 3
Example 28
0
0.2
0.4
0.6
0.8
Short fiber-fixed area (m2)

FIG. 6B

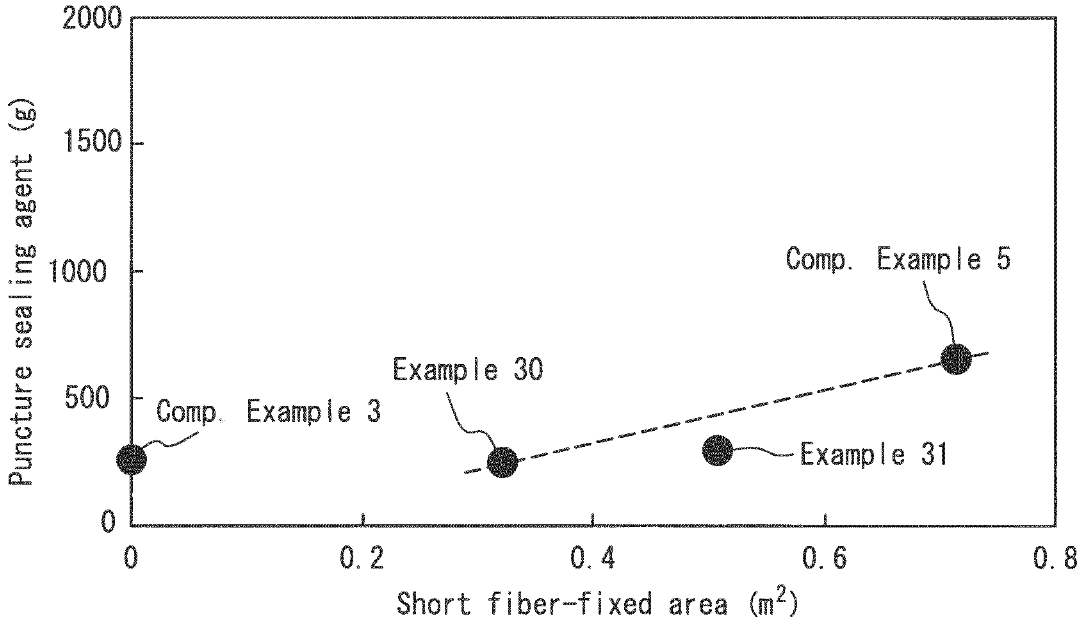
2000
1500
1000
500
0
Puncture sealing agent (g)
Comp. Example 5
Example 30
Comp. Example 3
Example 31
0
0.2
0.4
0.6
0.8
Short fiber-fixed area (m2)

FIG. 7A

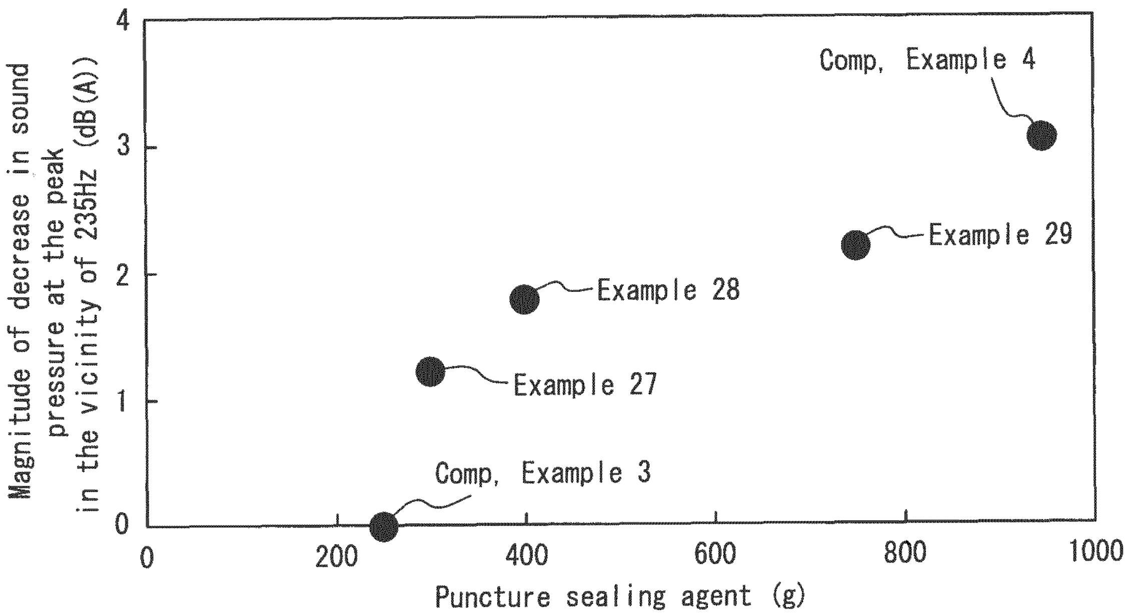
Magnitude of decrease in sound pressure at the peak in the vicinity of 235Hz (dB(A))
Puncture sealing agent (g)
0
1
2
3
4
200
400
600
800
1000
Comp, Example 4
Example 29
Example 28
Example 27
Comp, Example 3

FIG. 7B

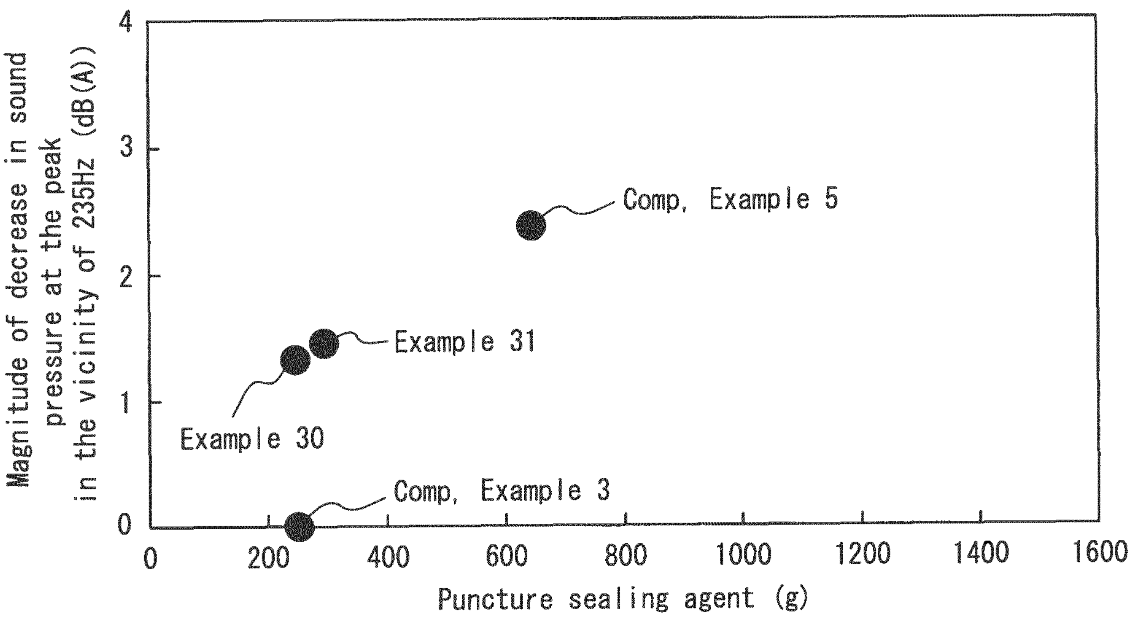
Magnitude of decrease in sound pressure at the peak in the vicinity of 235Hz (dB(A))
Puncture sealing agent (g)
0
1
2
3
4
200
400
600
800
1000
1200
1400
1600
Comp, Example 5
Example 31
Example 30
Comp, Example 3

## INTERNATIONAL SEARCH REPORT

International application No.
PCT/JP2012/005338

A. CLASSIFICATION OF SUBJECT MATTER
*B60C5/00*(2006.01)i, *B29D30/30*(2006.01)i

According to International Patent Classification (IPC) or to both national classification and IPC

B. FIELDS SEARCHED

Minimum documentation searched (classification system followed by classification symbols)
B60C5/00, B29D30/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-082387 A (Bridgestone Corp.), 18 March 2004 (18.03.2004), abstract; claims; paragraphs [0111], [0114], [0155]; fig. 1 to 4 (Family: none) | 1-11 |
| Y | JP 2009-045747 A (Bridgestone Corp.), 05 March 2009 (05.03.2009), abstract; claims; paragraphs [0005], [0015], [0020], [0021]; fig. 1 to 8 (Family: none) | 1-11 |
| Y | JP 2009-046068 A (Bridgestone Corp.), 05 March 2009 (05.03.2009), abstract; claims; paragraphs [0004], [0005], [0015], [0016]; fig. 1 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2012 (01.11.12) | 13 November, 2012 (13.11.12) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No. PCT/JP2012/005338

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-046089 A (Bridgestone Corp.), 05 March 2009 (05.03.2009), abstract; claims; paragraphs [0004], [0016]; fig. 1 (Family: none) | 1-11 |
| Y | JP 2009-051297 A (Bridgestone Corp.), 12 March 2009 (12.03.2009), abstract; claims; paragraph [0005]; fig. 1 (Family: none) | 1-11 |
| Y | JP 2007-099162 A (Sumitomo Rubber Industries, Ltd.), 19 April 2007 (19.04.2007), abstract; claims; paragraph [0032]; fig. 3 (Family: none) | 1-11 |
| Y | JP 2007-161069 A (Sumitomo Rubber Industries, Ltd.), 28 June 2007 (28.06.2007), abstract; claims; paragraph [0034]; fig. 1 & US 2007/0131328 A1 & US 2010/0108223 A1 & EP 1795378 A2 & CN 1978226 A & RU 2401213 C | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004082387 A